# EUROPEAN PATENT SPECIFICATION

(11) **EP 2 432 295 B1**
(45) Date of publication and mention of the grant of the patent: **17.02.2016**
(21) Application number: 11180868.9
(22) Date of filing: 12.09.2011
(51) Int. Cl.: H05B 1/02, H02J 3/01

(54) **Method and system for controlling a resistive load**
Verfahren und Vorrichtung zur Steuerung einer ohmschen Last
Procédé et dispositif pour commander une charge résistive

(30) Priority: 15.09.2010 IT TO20100755
(43) Date of publication of application: 21.03.2012
(73) Proprietor: Indesit Company S.p.A., 60044 Fabriano (AN) (IT)
(72) Inventor: Cesaroni, Andrea, 60035 Jesi (AN) (IT); Mariotti, Costantino, 06028 Sigillo (PG) (IT); Somma, Pasquale, 60044 Fabriano (AN) (IT)
(74) Representative: Santonicola, Paolo

(56) References cited:
- EP-A2- 0 989 663
- US-A1- 2004 099 655
- US-A1- 2005 271 372

## Description

### [TECHNICAL FIELD]

The present invention relates to the field of resistive-load type household appliances, in particular to a method for controlling the activation and/or the deactivation of a load according to the preamble of claim 1.

### [PRIOR ART]

Most household appliances available on the market employ resistive loads for heating up a fluid by Joule effect, which fluid may be the air in the cooking cavity of an electric oven, the air in the drying basket of a clothes dryer, or the wash water used by washing machines and dishwashers.

During the normal operation of the household appliance, the fluid must reach and maintain a certain temperature. This is obtained by connecting and disconnecting the load resistor to the power supply mains through a switch, depending on information provided by a temperature sensor. It is therefore apparent that, in normal operation, the load resistors of a household appliances are connected to and disconnected from the mains several times. At each connection, the mains must supply a high current all at once. This may involve a temporary mains voltage drop that brings about the flickering phenomenon, in addition to being generally harmful for any electric apparatus.

The flickering of the light produced by lamps, perceivable by the human eye, is due to sudden variations of the active voltage of the power supply mains to which the lamps are connected.

Light flickering is annoying for people and is even harmful for subjects affected by photosensitive epilepsy, if the brightness variation is within a certain frequency interval.

In order to limit the flickering phenomenon, all electric appliances, including all household appliances, must comply with suitable requirements set out in specific regulations. For household appliances, the reference standard is IEC 61000-3-3, which must be complied with to obtain the CE mark.

Hereafter the resistive load will be referred to as resistor.

In the household appliances known in the art, the flickering problem is tackled by subdividing the load into multiple resistors, which are connected to and disconnected from the mains at different times, so that the power is absorbed more gradually.

This technique suffers from the drawback that it requires many more electric components than a single-resistor solution; in particular, there are more resistors and more switches. In addition, the control unit must be able to handle the correct timing of multiple switches. This implies increased production costs and requires more room for housing the load and the electronics controlling it.

Document EP 0 989 663 A2 discloses a circuit for connection between a power supply and a load to reduce voltage fluctuation and flicked caused by arbitrarily switching the load on and off; it operates in such a way that the average value of the current flowed to the load components is reduced at a predetermined rate with respect to entire output of the rated AC power supply.

Document US 2005/271372 A1 discloses an electronic thermostat for e.g. coffee maker, having a relay and a triac through which electric power is applied to increase liquid temperature from initial temperature and to maintain liquid at target temperature. More in detail, a method is disclosed wherein a relay activates a load in a transient phase where a target temperature is reached starting from an initial temperature, whilst a triac activates the load in a final maintenance phase when target temperature has to be maintained.

### [OBJECTS AND BRIEF DESCRIPTION OF THE INVENTION]

It is one object of the present invention to overcome some of the above-described drawbacks of the prior art.

In particular, it is one object of the present invention to prevent the household appliance from causing any flickering while at the same time making it simpler and reducing the costs and dimensions thereof compared to the prior art.

This and other objects of the present invention are achieved through a method and a household appliance incorporating the features set out in the appended claims, which are intended as an integral part of the present description.

The idea at the basis of the present invention is a method for activating and deactivating a resistive load of a household appliance wherein, at each mains half-cycle, a first switch, interposed between the load and the mains, is held closed for a time interval whose duration changes from a predetermined initial value to a predetermined final value in accordance with a monotonic law.

When the load is activated, the monotonic law is an increasing one and, once the final value has been reached, the first switch opens and a second switch, also interposed between the load and the mains, closes.

When the load is deactivated, the action of the first switch is preceded by the opening of the second switch, and the monotonic law is a decreasing one.

This method allows for activating and deactivating the load gradually, thus limiting the flickering generated on the mains to values smaller than specified by the above-mentioned standard.

Preferably, at each mains half-cycle, the closing interval of the first switch ends when the mains voltage reaches the null value.

This latter embodiment is particularly advantageous because it allows the power supplied to the load to be easily controlled by using common switches such as TRIACs.

The monotonic law is preferably of the linear type.

The present invention further relates to a system adapted to connect a resistive load of a household appliance to an alternating current mains. This system is suitable for implementing the method described above, and comprises:
- a TRIAC corresponding to the first switch;
- a relay corresponding to the second switch;
- a control unit operationally connected to the TRIAC and to the relay in order to drive the opening and closing thereof.

The present invention also relates to a household appliance comprising the above-mentioned system.

Preferably, the household appliance may be a dishwasher or a washing machine or a clothes dryer or a washing/drying machine or an oven.

Further objects and advantages of the present invention will become more apparent from the following description and from the annexed drawings.

### [BRIEF DESCRIPTION OF THE DRAWINGS]

Some preferred and advantageous embodiments will now be described by way of nonlimiting example with reference to the annexed drawings, wherein:
- Fig. 1 shows a household appliance according to the present invention;
- Fig. 2 is a functional block diagram of a circuit implementing the method according to the present invention;
- Fig. 3 shows the partialization of the mains voltage in accordance with the present invention;
- Fig. 4 shows one example of embodiment of the two switches 73 and 74 of Fig. 2. The drawings show different aspects and embodiments of the present invention and, where appropriate, similar structures, components, materials and/or elements in the various drawings are designated by the same reference numerals.

### [DETAILED DESCRIPTION OF THE INVENTION]

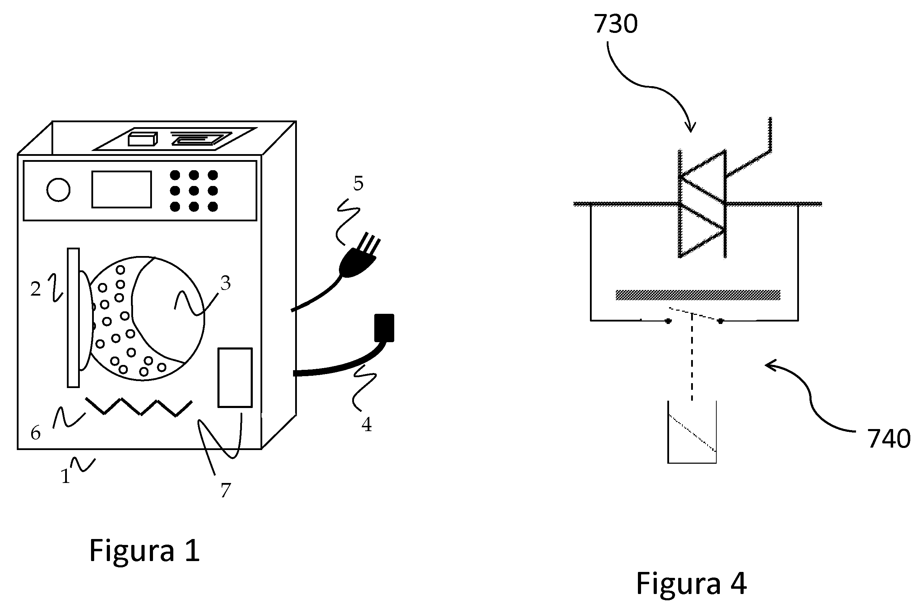

Fig. 1 shows a household appliance 1 according to the present invention. In particular, the household appliance 1 is a washing machine that comprises a door 2, a wash drum 3, a water supply hose 4, a power plug 5, a load resistor 6 and a system for connecting the load resistor to the electric mains 7.

During a wash cycle, the washing machine is supplied with water through the hose 4; the water is then warmed up by the resistor 6 and is injected into the drum 3, where the laundry previously placed therein is washed.

The power plug 5 connects the washing machine electrically to an alternating current supply mains. In particular, said supply mains is a single-phase one. The mains current is also supplied to the resistor 6.

The system 7 is connected in series between the resistor 6 and one phase of the supply mains 21 coming from the plug 5.

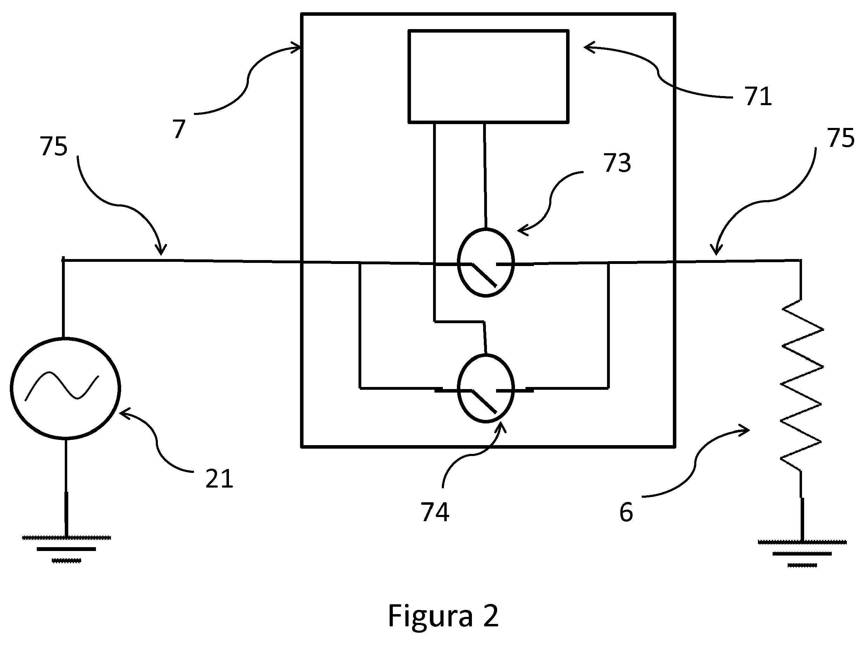

Fig. 2 shows a block diagram of the system 7, which implements the method disclosed by the present invention.

A control unit 71 is operationally connected to a first electronic switch 73 and to a second electronic switch 74, so as to individually drive the opening and/or closing thereof.

The electronic switches 73 and 74 are arranged in series between the resistor 6 and one phase of the mains voltage 21. The electric connection among these components takes place through conductive means 75 which comprise copper wires having an area sufficient to withstand the currents typically flowing in resistive loads of household appliances without excessive power being dissipated in the wires themselves.

The resistor 6 is adapted to dissipate the power outputs required for the normal operation of the household appliance where it has been installed.

In a preferred embodiment, the resistor dissipates power in excess of 2 kW.

The resistor 6 may be any known resistor; for example, it may be made of a metal alloy comprising iron or chrome or tungsten or constantan...

Fig. 4 shows a preferred embodiment of the switches 73 and 74, wherein they are respectively a TRIAC 730 and a relay 740, both of which can withstand the typical currents absorbed by resistive loads of household appliances.

The control terminal of the TRIAC 730 and the control branch of the relay 740 are operationally connected, separately, to two output terminals of the control unit 71.

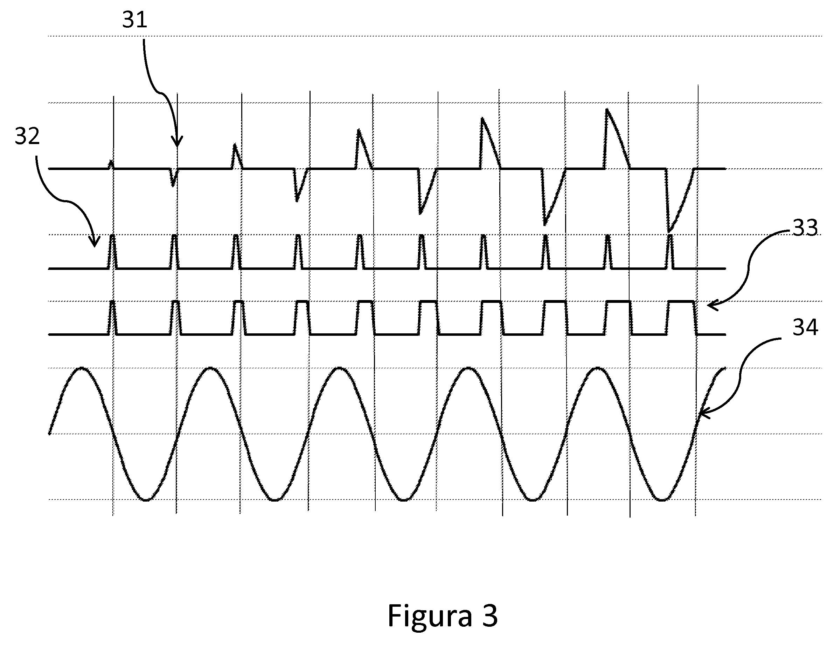

Fig. 3 is a graph that shows the time trend of the mains voltage 34 and the time trend of the voltage 31 across the resistor 6 when the switch is controlled in accordance with the method disclosed by the present invention. The square wave 32 represents the control signal of the switch 73, and consists of a sequence of positive pulses adapted to cause the switch 73 to close; the square wave 33 represents the closing and opening intervals of the switch 73, wherein the high value indicates the closed state and the low value indicates the open state.

In a particular embodiment, the mains voltage 34 has the typical European amplitude and frequency values, i.e. 50 Hz and 220 active Volts. Alternatively, the mains voltage 34 may have different characteristics; for example, in the United States of America it has an amplitude of 120 active Volts and a frequency of 60 Hz.

When the switch 73 is closed, the voltage across the resistor 6 coincides with the mains voltage, and the resistor dissipates power. On the contrary, when the switch 73 is open, no power is supplied through it to the resistor 6.

The closing interval in each corresponding half-cycle of the mains voltage is determined by a closing instant TC and an opening instant TA, the time elapsing between these two instants (TA-TC) being the duration of the closing interval of the switch 73 in the corresponding half-cycle. The switch 73 closes at each half-cycle of the mains voltage for a duration of the closing interval which is a portion of the duration of the half-cycle of the mains voltage. The pulsed waveform 32 shows the drive signal of the TRIAC 730. Each pulse causes the TRIAC 730 to close at a corresponding instant TC, thus starting the closing interval for each half-cycle.

The pulses that cause the TRIAC 730 to close are sent to the control terminal of the TRIAC 730 at the closing instants TC of each half-cycle.

As is known, the TRIAC 730 opens when the voltage across it becomes null; as a consequence, in the square wave 32 the opening instant TA, and hence the end of the closing interval, always coincides with the instant at which the mains voltage crosses the 0V value. In order to activate the load, the method uses an activation transient that follows a phase in which the load is inactive, so that the closing interval has a duration of 0 s and precedes a phase in which the load is active.

During the load activation transient, the method provides for increasing the duration of the closing interval at each half-cycle with respect to the duration of the closing interval of the previous half-cycle, starting from the initial value 0 s until a predetermined final value is reached which corresponds to the end of the activation transient.

The duration of the closing interval in the activation transient has an increasing monotonic trend.

In a preferred embodiment, the duration of the closing intervals in the activation transient increases in a linear manner.

In another particular embodiment, the final value of the duration of the closing interval equals the duration of the mains half-cycle.

The activation transient lasts for a predetermined number of cycles or, correspondingly, for a predetermined time interval, since the mains voltage is known a priori and stable.

In a preferred embodiment, the duration of the activation transient is between 100 ms and 800 ms, or between 10 and 80 half-cycles; in fact, laboratory tests carried out have shown that with these values household appliances attain the best results in terms of flickering reduction, thus complying with the requirements set out in the specific regulations. In particular, the optimum result is attained with a duration of the activation transient of 500 ms, or 50 half-cycles.

Finally, at the end of the activation transient the first switch 73 opens and the second switch 74 closes, so that the electric contact between the mains and the load is definitively established throughout the phase in which the load is active.

In order to deactivate the load from the mains, the method provides for opening the second switch 74 and generating a subsequent deactivation transient, which precedes the phase in which the load is inactive.

During the deactivation transient, the method provides for decreasing at each mains half-cycle the closing time of the first switch 73 with respect to the closing time in the previous half-cycle, starting from an initial value greater than 0 s until a final value of 0 s is reached, which corresponds to the end of the deactivation transient.

The duration of the closing interval in the deactivation transient therefore has a decreasing monotonic trend.

Preferably, the opening of the second switch 74 occurs with the first switch 73 closed, or at least simultaneously with the closing of the first switch 73.

In a particular embodiment, the initial value of the duration of the closing interval equals the duration of the mains half-cycle.

In a further embodiment, the duration of the closing intervals in the deactivation transient decreases in a linear manner.

In a preferred embodiment, the duration of the deactivation transient is between 100 ms and 800 ms, or between 10 and 80 half-cycles; in particular, it is equal to 500 ms or 50 half-cycles.

In the phase in which the load is inactive, the first switch 73 and the second switch 74 are both open.

In particular, both in the activation transient and in the deactivation transient, the closing interval of the switch 73 may end when the mains voltage crosses the 0V value; in such a case, it is advantageous to provide the switch 73 in the form of the TRIAC 730.

## Claims

1. A method for activating a resistive load (6) of a household appliance by means of a TRIAC corresponding to a first switching device (73) interposed between an alternating current supply source (21) and said resistive load (6), said method comprising the step of closing said first switching device (73), during a succession of half-cycles of the mains power signal, for a corresponding time interval, wherein the duration of said time interval changes from a predetermined initial value to a predetermined final value in accordance with an increasing monotonic law;
**characterized in that** it further comprises the step of, once said predetermined final value has been reached, opening said first switching device (73) and closing a relay corresponding to a second switch (74), said second switch (74) being interposed between said alternating current supply source (21) and said resistive load (6).

2. A method according to claim 1, wherein said time interval ends when the voltage of said supply source is null.

3. A method according to any one of the preceding claims, wherein said final value equals the duration of said half-cycle.

4. A method according to any one of the preceding claims, wherein said monotonic law is linear.

5. A method according to any one of the preceding claims, wherein said duration of said interval changes from said initial value to said final value within a time between 100 ms and 800 ms, in particular within a time of 500 ms.

6. A method for deactivating a resistive load (6) of a household appliance by means of a TRIAC corresponding to a first switching device (73), said method comprising the step of closing said first switching device (73), during a succession of half-cycles of the mains power signal, for a corresponding time interval, wherein the duration of said time interval changes from a predetermined initial value to a predetermined final value in accordance with a decreasing monotonic law;
**characterized in that** it further comprises a previous step of opening a relay corresponding to a second switching device (74) interposed between an alternating current supply source (21) and said resistive load (6).

7. A method according to claim 6, wherein said time interval ends when the voltage of said supply source is null.

8. A method according to any one of claims 6-7, wherein said initial value equals the duration of said half-cycle.

9. A method according to any one of claims 6-8, wherein said monotonic law is linear.

10. A method according to any one of claims 6-9, wherein said duration of said interval changes from said initial value to said final value within a time between 100 ms and 800 ms, in particular within a time of 500 ms.

11. A method according to any one of claims 6-10, **characterized in that** it follows an activation method according to any one of claims 1-5.

12. A system (7) suitable for activating and/or deactivating a resistive load (6) of a household appliance, comprising a TRIAC (730), a control unit (71) and a resistive load (6), said TRIAC (730) being connected between said resistive load (6) and an alternating current supply source (21), said control unit (71) being operationally connected to said TRIAC (730) in order to drive the opening/closing thereof, wherein said control unit (71) is adapted to control said TRIAC (730) so as to implement a method for activating said resistive load (6) according to any one of claims 1-5 and/or a method for deactivating said resistive load (6) according to any one of claims 6-11,
**characterized in that** it further comprises
a relay (740), said relay (740) being connected between said resistive load (6) and an alternating current supply source (21), said control unit (71) being operationally connected to said relay (740) in order to drive the opening/closing thereof, wherein said control unit (71) is adapted to control said relay (740) so as to implement a method for activating said resistive load (6) according to any one of claims 1-5 and/or a method for deactivating said resistive load (6) according to any one of claims 6-11.

13. A household appliance (1), in particular a dishwasher or a washing machine or a clothes dryer or a washing/drying machine or an oven, **characterized by** comprising the system according to claim 12.

## Patentansprüche

1. Verfahren zum Aktivieren einer Widerstandslast (6) eines Haushaltsgeräts mittels eines TRIAC, welcher einer ersten Schaltvorrichtung (73) entspricht, welche zwischen eine Wechselstromquelle (21) und die Widerstandslast (6) eingefügt ist, wobei das Verfahren den Schritt eines Schließens der ersten Schaltvorrichtung (73) während einer Folge von Halbzyklen des Versorgungsnetzsignals für ein entsprechendes Zeitintervall umfasst, wobei die Dauer des Zeitintervalls sich von einem vorbestimmten Ausgangswert zu einem vorbestimmten Endwert gemäß einem monoton ansteigenden Gesetz ändert;
**dadurch gekennzeichnet, dass** es, sobald der vorbestimmte Endwert erreicht worden ist, ferner den Schritt eines Öffnens der ersten Schaltvorrichtung (73) und Schließens eines Relais, welches einem zweiten Schalter (74) entspricht, umfasst, wobei der zweite Schalter (74) zwischen die Wechselstromquelle (21) und die Widerstandslast (6) eingefügt ist.

2. Verfahren nach Anspruch 1, wobei das Zeitintervall endet, wenn die Spannung der Stromquelle null beträgt.

3. Verfahren nach einem der vorhergehenden Ansprüche, wobei der Endwert gleich der Dauer des Halbzyklus ist.

4. Verfahren nach einem der vorhergehenden Ansprüche, wobei das monotone Gesetz linear ist.

5. Verfahren nach einem der vorhergehenden Ansprüche, wobei die Dauer des Intervalls sich von dem Ausgangswert zu dem Endwert in einer Zeit zwischen 100 ms und 800 ms, insbesondere in einer Zeit von 500 ms, ändert.

6. Verfahren zum Deaktivieren einer Widerstandslast (6) eines Haushaltsgeräts mittels eines TRIAC, welcher einer ersten Schaltvorrichtung (73) entspricht, wobei das Verfahren den Schritt eines Schließens der ersten Schaltvorrichtung (73) während einer Folge von Halbzyklen des Versorgungsnetzsignals für ein entsprechendes Zeitintervall umfasst, wobei die Dauer des Zeitintervalls sich von einem vorbestimmten Ausgangswert zu einem vorbestimmten Endwert gemäß einem monoton abnehmenden Gesetz ändert;
**dadurch gekennzeichnet, dass** es ferner einen vorherigen Schritt eines Öffnens eines Relais, welches einer zweiten Schaltvorrichtung (74) entspricht, umfasst, welche zwischen eine Wechselstromquelle (21) und die Widerstandslast (6) eingefügt ist.

7. Verfahren nach Anspruch 6, wobei das Zeitintervall endet, wenn die Spannung der Stromquelle null beträgt.

8. Verfahren nach einem der Ansprüche 6-7, wobei der Ausgangswert gleich der Dauer des Halbzyklus ist.

9. Verfahren nach einem der Ansprüche 6-8, wobei das monotone Gesetz linear ist.

10. Verfahren nach einem der Ansprüche 6-9, wobei die Dauer des Intervalls sich von dem Ausgangswert zu dem Endwert in einer Zeit zwischen 100 ms und 800 ms, insbesondere in einer Zeit von 500 ms, ändert.

11. Verfahren nach einem der Ansprüche 6-10, **dadurch gekennzeichnet, dass** es einem Aktivierungsverfahren nach einem der Ansprüche 1-5 folgt.

12. System (7), welches geeignet ist, eine Widerstandslast (6) eines Haushaltsgeräts zu aktivieren oder/und deaktivieren, umfassend ein TRIAC (730), eine Steuereinheit (71) und eine Widerstandslast (6), wobei der TRIAC (730) zwischen der Widerstandslast (6) und einer Wechselstromquelle (21) verbunden ist, wobei die Steuereinheit (71) betriebsmäßig mit dem TRIAC (730) verbunden ist, um das Öffnen/Schließen davon anzutreiben, wobei die Steuereinheit (71) dazu eingerichtet ist, den TRIAC (730) derart zu steuern, dass ein Verfahren zum Aktivieren der Widerstandslast (6) nach einem der Ansprüche 1-5 oder/und ein Verfahren zum Deaktivieren der Widerstandslast (6) nach einem der Ansprüche 6-11 implementiert wird,
**dadurch gekennzeichnet, dass** es ferner umfasst:
ein Relais (740), wobei das Relais (740) zwischen der Widerstandslast (6) und einer Wechselstromquelle (21) verbunden ist, wobei die Steuereinheit (71) betriebsmäßig mit dem Relais (740) verbunden ist, um das Öffnen/Schließen davon anzutreiben, wobei die Steuereinheit (71) dazu eingerichtet ist, das Relais (740) derart zu steuern, dass ein Verfahren zum Aktivieren der Widerstandslast (6) nach einem der Ansprüche 1-5 oder/und ein Verfahren zum Deaktivieren der Widerstandslast (6) nach einem der Ansprüche 6-11 implementiert wird.

13. Haushaltsgerät (1), insbesondere Spülmaschine oder Waschmaschine oder Wäschetrockner oder Wasch-Trockenmaschine oder Ofen, **dadurch gekennzeichnet, dass** es das System nach Anspruch 12 umfasst.

## Revendications

1. Procédé permettant d'activer une charge résistive (6) d'un appareil électroménager au moyen d'un TRIAC correspondant à un premier dispositif de commutation (73) interposé entre une source d'alimentation en courant alternatif (21) et ladite charge résistive (6), ledit procédé comportant l'étape comprenant de fermer ledit premier dispositif de commutation (73), pendant une succession de demi-alternances du signal d'alimentation secteur, pendant un laps de temps correspondant, dans lequel la durée dudit laps de temps varie d'une valeur initiale prédéterminée à une valeur finale prédéterminée selon une loi monotone croissante ;
**caractérisé en ce qu'**il comporte, de plus, l'étape comprenant, une fois que ladite valeur finale prédéterminée a été atteinte, d'ouvrir ledit premier dispositif de commutation (73) et de fermer un relais correspondant à un second commutateur (74), ledit second commutateur (74) étant interposé entre ladite source d'alimentation en courant alternatif (21) et ladite charge résistive (6).

2. Procédé selon la revendication 1, dans lequel ledit laps de temps se termine lorsque la tension de ladite source d'alimentation est nulle.

3. Procédé selon l'une quelconque des revendications précédentes, dans lequel ladite valeur finale est égale à la durée de ladite demi-alternance.

4. Procédé selon l'une quelconque des revendications précédentes, dans lequel ladite loi monotone est linéaire.

5. Procédé selon l'une quelconque des revendications précédentes, dans lequel ladite durée dudit intervalle varie de ladite valeur initiale à ladite valeur finale dans un intervalle de temps compris entre 100 ms et 800 ms, en particulier dans un laps de temps de 500 ms.

6. Procédé permettant de désactiver une charge résistive (6) d'un appareil électroménager au moyen d'un TRIAC correspondant à un premier dispositif de commutation (73), ledit procédé comportant l'étape comprenant de fermer ledit premier dispositif de commutation (73), pendant une succession de demi-alternances du signal d'alimentation secteur, pendant un laps de temps correspondant, dans lequel la durée dudit laps de temps varie d'une valeur initiale prédéterminée à une valeur finale prédéterminée selon une loi monotone décroissante ;
**caractérisé en ce qu'**il comporte, de plus, une étape préalable consistant à ouvrir un relais correspondant à un second dispositif de commutation (74) interposé entre une source d'alimentation en courant alternatif (21) et ladite charge résistive (6).

7. Procédé selon la revendication 6, dans lequel ledit laps de temps se termine lorsque la tension de ladite source d'alimentation est nulle.

8. Procédé selon l'une quelconque des revendications 6 à 7, dans lequel ladite valeur initiale est égale à la durée d'une demi-alternance.

9. Procédé selon l'une quelconque des revendications 6 à 8, dans lequel ladite loi monotone est linéaire.

10. Procédé selon l'une quelconque des revendications 6 à 9, dans lequel ladite durée dudit intervalle varie de ladite valeur initiale à ladite valeur finale dans un laps de temps compris entre 100 ms et 800 ms, en particulier dans un laps de temps de 500 ms.

11. Procédé selon l'une quelconque des revendications 6 à 10, **caractérisé en ce qu'**il suit un procédé d'activation selon l'une quelconque des revendications 1 à 5.

12. Dispositif (7) approprié pour activer et/ou désactiver une charge résistive (6) d'un appareil électroménager, comportant un TRIAC (730), une unité de commande (71) et une charge résistive (6), ledit TRIAC (730) étant connecté entre ladite charge résistive (6) et une source d'alimentation en courant alternatif (21), ladite unité de commande (71) étant connectée fonctionnellement au dit TRIAC (730) en vue de commander son ouverture ou sa fermeture, dans lequel ladite unité de commande (71) est conçue pour commander ledit TRIAC (730) de façon à mettre en oeuvre un procédé permettant d'activer ladite charge résistive (6) selon l'une quelconque des revendications 1 à 5 et/ou un procédé permettant de désactiver ladite charge résistive (6) selon l'une quelconque des revendications 6 à 11,
**caractérisé en ce qu'**il comprend, de plus,
un relais (740), ledit relais (740) étant connecté entre ladite charge résistive (6) et une source d'alimentation en courant alternatif (21), ladite unité de commande (71) étant connectée fonctionnellement au dit relais (740) afin de commander son ouverture ou sa fermeture, dans lequel ladite unité de commande (71) est conçue pour commander ledit relais (740) de façon à mettre en oeuvre un procédé permettant d'activer ladite charge résistive (6) selon l'une quelconque des revendications 1 à 5 et/ou un procédé permettant de désactiver ladite charge résistive (6) selon l'une quelconque des revendications 6 à 11.

13. Appareil électroménager (1), en particulier un lave-vaisselle ou une machine à laver ou un sèche-linge ou une machine à laver et à sécher le linge ou un four, **caractérisé par** le fait de comporter le dispositif selon la revendication 12.
